# EUROPÄISCHE PATENTSCHRIFT

(11) **EP 1 587 168 B1**
(45) Veröffentlichungstag und Bekanntmachung des Hinweises auf die Patenterteilung: **24.01.2007**
(21) Anmeldenummer: 05007017.6
(22) Anmeldetag: 31.03.2005
(51) Int. Cl.: H01R 9/26

(54) **Auf Trägerelementen einer elektrischen Einrichtung anzuordnendes Teil**
Part to fix an electrical device on a support element
Elément pour fixer un dispositif électrique dans un élément de support

(30) Priorität: 16.04.2004 DE 102004019172
(43) Veröffentlichungstag der Anmeldung: 19.10.2005
(73) Patentinhaber: ABB PATENT GmbH, 68526 Ladenburg (DE)
(72) Erfinder: Muders, Erwin, Dipl.-Ing., 69126 Heidelberg (DE); Majewski, Joachim, 69221 Dossenheim (DE)
(74) Vertreter: Miller, Toivo

(56) Entgegenhaltungen:
- DE-A1- 2 946 079
- DE-A1- 19 709 809
- DE-A1- 19 709 815
- US-A- 5 145 418
- US-A- 5 192 227

## Beschreibung

Die Erfindung betrifft ein auf Trägerelementen, insbesondere Stromschienen oder Normprofilschienen, einer elektrischen Einrichtung, insbesondere eines Verteilers, anzuordnendes Teil, insbesondere ein Installationsschaltgerät oder ein Zwischenteil zum Anordnen eines Installationsschaltgerätes, beispielsweise eines Sicherungshauptschalters, auf den Stromschienen eines Verteilers, mit wenigstens einem hinter eine der Stromschienen greifenden ersten Befestigungselement an seiner Befestigungsseite, gemäß dem Oberbegriff des Anspruchs 1.

Ein solches Teil ist beispielsweise aus der DE 202 09 246 bekannt. Das dort offenbarte Zwischenteil zum Anordnen eines Installationsschaltgerätes auf Stromschienen oder Profilschienen in einem Verteiler wird mittels eines Halteteils auf einer Stromschiene gehalten, und kann unter Zuhilfenahme eines Werkzeuges wieder gelöst werden. Das Halteteil hintergreift in einer Raststellung eine der Stromschienen und gibt sie in einer Entnahmestellung frei, so dass das Teil in der Entnahmestellung des Halteteils von der Stromschiene abgenommen werden kann.

Das Halteteil ist federnd in Richtung auf die Raststellung beaufschlagt. Dadurch wird zwar in der Raststellung eine sichere Verrastung des Halteteils auf dem Trägerelement bewirkt. Beim Entnehmen muß allerdings während des gesamten Entnahmevorgangs mit einem Werkzeug das Halteteil in der Entnahmestellung gehalten werden, da sonst das Halteteil wieder in die Raststellung zurückschnappt und ein entnehmen des Teils dann verhindert wäre. Dieses Erfordernis, während des Entnahmevorganges das Halteteil die ganze Zeit über mit einem Werkzeug festzuhalten, macht das Demontieren des Halteteils von der Stromschiene umständlich und zeitaufwändig. Dokument US-A-5 192 227 das als nächtsliegender Stand der Technik anzusehen ist offenbart ein auf Trägerelementen anzuordnendes Teil gemäss dem Oberbegriff des Anspruchs 1.

Es ist daher die Aufgabe der vorliegenden Erfindung, ein gattungsgemäßes Teil zu schaffen, dessen Entnahme von Stromschienen oder Profilschienen stark vereinfacht ist.

Die Aufgabe wird erfindungsgemäß gelöst durch die kennzeichnenden Merkmale des Anspruchs 1. Erfindungsgemäß wirkt mit dem Halteteil ein Sperrhebel zusammen, derart, dass der Sperrhebel in der Entnahmestellung des Halteteils eine Halteposition einnimmt, in der er mit dem Trägerelement so zusammenwirkt, dass ein Zurückgleiten des Halteteils aus der Entnahme- in die Raststellung so lange verhindert wird, wie das Teil sich auf dem Trägerelement befindet.

In einer vorteilhaften Ausgestaltungsform ist der Sperrhebel an dem Halteteil schwenkbar gelagert. Er kann dann in der Entnahmestellung des Halteteils eine Halteposition einnehmen, in der er mit dem Trägerelement so zusammenwirkt, dass ein Zurückgleiten des Halteteils aus der Entnahme- in die Raststellung verhindert wird.

In der Raststellung des Halteteils ist der Sperrhebel durch das Trägerelement in einer Ruheposition gehalten, aus der heraus er in der Entnahmestellung des Halteteils in die Halteposition verbringbar ist. Auf diese Weise wird der Sperrhebel beim - erstmaligen oder erneuten - Einsetzen des Teils auf das Trägerelement von dem Trägerelement ohne Zutun des Bedieners in der Ruheposition gehalten. Wenn er vor dem Einsetzen in der Halteposition war, so geht er beim Einsetzen des Teils auf das Trägerelement damit durch Zusammenwirken mit dem Trägerelement aus der Halteposition in die Ruheposition über, etwa indem das Trägerelement beim Aufsetzen des Teils den Sperrhebel in die Ruheposition drückt.

Der Sperrhebel kann dabei so gestaltet und angebracht sein, dass er durch die Rückstellkraft einer mit ihm zusammenwirkenden Feder aus seiner Ruheposition in seine Halteposition verbringbar ist. Vorteilhafterweise befindet sich der erste Anlenkpunkt dieser Feder an dem Sperrhebel, und der zweite Anlenkpunkt der Feder befindet an dem Halteteil. Die Feder ist dabei in vorteilhafter Ausgestaltung eine Schraubenfeder oder eine Spiralfeder oder eine Blattfeder.

Gemäß einer anderen sehr vorteilhaften Ausgestaltung ist der Sperrhebel in der Entnahmestellung des Halteteils durch einen Vorsprung auf der Befestigungsseite des Teils in seine Halteposition verbringbar. Der Vorsprung ist dabei so angeordnet und bemessen, dass er erst beim Übergang des Halteteils von der Raststellung in die Entnahmestellung mit dem Sperrhebel zusammenwirkt und bei Erreichen der Entnahmestellung der Sperrhebel durch den Vorsprung in seine Halteposition gebracht ist.

Das Halteteil ist in weiterhin vorteilhafter Ausgestaltung mit einem Werkzeug aus der Raststellung in die Entnahmestellung verbringbar. Es ist allerdings auch eine Ausgestaltung der Erfindung denkbar, in der zum Verbringen des Halteteils aus der Raststellung in die Entnahmestellung kein Werkzeug benötigt wird. Beispielsweise wurde bereits früher ein Teil mit Halteteil vorgeschlagen, bei dem an dem Halteteil selbst ein zur Bedienerseite des Teils hin herausragender Hebel angeformt ist, mit dessen Hilfe das Halteteil in die Entnahmestellung gebracht werden kann. An ein solches bereits früher beschriebenes Teil mit Halteteil kann ein erfindungsgemäßer Sperrhebel wie oben beschrieben selbstverständlich ebenfalls angebracht werden. Dann wäre zum Verbringen des erfindungsgemäßen Teils mit Halteteil aus der Rastposition in die Entnahmeposition kein Werkzeug nötig.

Insbesondere vorteilhaft ist es, wenn das Halteteil federnd mit einer Rückstellkraft in Richtung der Raststellung beaufschlagt ist. Damit ist sichergestellt, dass nach Entnahme des erfindungsgemäßen Teils von dem Trägerelement, beispielsweise der Stromsammelschiene, das Halteteil wieder in die Rastposition zurückbewegt wird, so dass beim erneuten Aufsetzen des Teils auf das Trägerelement dieses dort verrastet, ohne dass dazu eine besondere Bedienerhandlung vorgenommen werden muß.

Eine sehr vorteilhafte Ausgestaltung der Erfindung sieht eine Anordnung des Sperrhebels vor, bei der dieser in der Ruheposition in einen Zwischenraum zwischen dem Trägerelement und der Befestigungsseite des Teils eingreift. Er ist damit ohne zusätzlichen Platzbedarf untergebracht, wenn das Teil auf dem Trägerelement montiert ist.

Insgesamt liegt der Vorteil des erfindungsgemäßen Teils mit Halteteil in einer stark vereinfachten Demontage des Teils von den Trägerelementen, beispielsweise der Demontage von Installationsschaltgeräten von den Stromsammelschienen in einem Verteilerkasten der elektrischen Hausinstallation. Bei der Demontage eines erfindungsgemäßen Teils mit Halteteil wird nämlich zunächst das Halteteil - mit oder ohne Werkzeug, je nach Ausgestaltungsart - aus der Rast- in die Entnahmeposition gebracht. Der Sperrhebel verhindert ein Zurückbewegen des Halteteils in die Rastposition, nachdem das Werkzeug entfernt oder die entsprechende Krafteinwirkung auf den am Halteteil zum Zwecke des Verbringens des Halteteils in die Entnahmeposition angeformten Hebels entfallen ist, also nachdem der Monteur den Hebel in der Entnahmeposition wieder losgelassen oder das Werkzeug entfernt hat. Das Halteteil verbleibt somit entnahmebereit in der Entnahmeposition, während das Teil aber noch auf dem Trägerelement aufsitzt. Dieser Vorgang kann beispielsweise bei einer Mehrzahl von zu entnehmenden Installationsgeräten eines Geräteverbundes nacheinander sehr schnell und einfach ausgeführt werden. Anschließend werden alle solcherart in Entnahmeposition gebrachten Teile einfach nach vorne, in Richtung der Bedienebene hin, von dem Trägerelement abgezogen, wobei das Halteteil jedes teils nach dem Entnehmen sogleich wieder in die Rastposition zurückgleitet und das Teil somit für eine erneute Montage bereit ist.

Früher wurde bereits ein Teil mit Halteteil beschrieben, bei dem das Halteteil zweistufig ausgebildet ist, so dass es auf Stromschienen einfacher und doppelter Dicke anbringbar ist. An ein solches Teil mit zweistufig ausgeführtem Halteteil lässt sich ein erfindungsgemäßer Sperrhebel anbringen. In einer daraus resultierenden besonders günstigen Ausführungsform der Erfindung ist dann das erfindungsgemäße Teil mit Halteteil auf Stromschienen einfacher oder doppelter Dicke genauso einfach demontierbar wie oben beschrieben.

Weitere vorteilhafte Ausgestaltungen und Verbesserungen der Erfindung und weitere Vorteile sind den Unteransprüchen zu entnehmen.

Anhand der Zeichnungen, in denen drei Ausführungsbeispiele der Erfindung dargestellt sind, soll die Erfindung näher erläutert und beschrieben werden.

Es zeigen
- Fig. 1: ein erfindungsgemäßes Teil als Zwischenteil mit darauf angeordnetem Installationsschaltgerät,
- Fig. 2: als Detailansicht das Halteteil des Teils aus Fig. 1 in Raststellung,
- Fig. 3: als Detailansicht das Halteteil des Teils aus Fig. 1 in Entnahmestellung,
- Fig. 4: als Detailansicht ein Halteteil des Teils nach Fig. 1 mit Spiralfeder in Raststellung,
- Fig. 5: als Detailansicht ein Halteteil des Teils nach Fig. 1 mit Spiralfeder in Entnahmestellung,
- Fig. 6: Detailansicht einer weiteren Ausführungsart eines Teils mit Halteteil in Raststellung, sowie
- Fig. 7: Detailansicht der Ausführungsart eines Teils mit Halteteil nach Fig. 6 in Entnahmestellung.

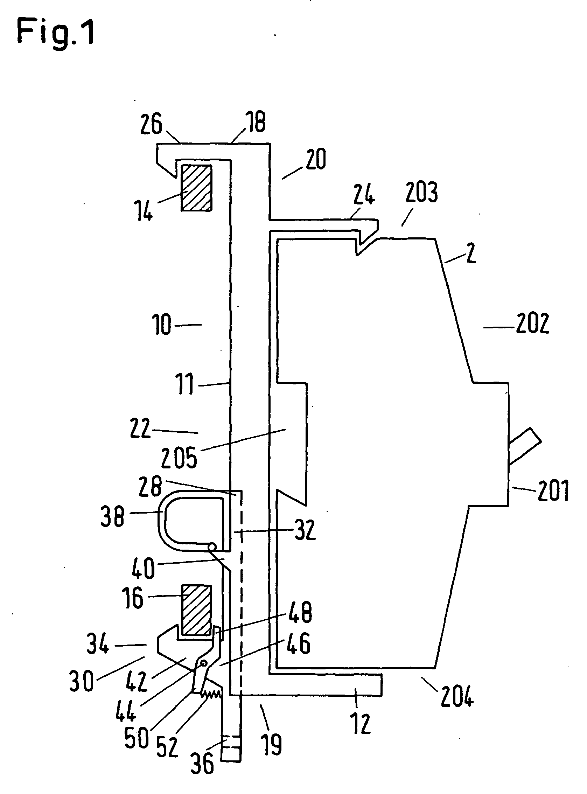

Fig. 1 zeigt ein erfindungsgemäßes Teil 10 in der Ausführungsform als Zwischenteil zum Anordnen eines Installationsschaltgerätes 2 auf Stromschienen 14,16 eines Verteilers. Das Teil 10 hat im wesentlichen die Form einer rechteckigen ersten Platte 11 mit einem an einer ihrer Schmalseiten angeformten Sitz 12 zur Aufnahme eines Installationsschaltgerätes 2, beispielsweise eines Sicherungshauptschalters. Das Installationsgerät 2 weist eine vordere Gerätefrontseite 201, eine hintere Gerätefrontseite 202, eine - in montierter Lage - obere Geräteschmalseite 203 und eine untere Geräteschmalseite 204, sowie eine Gerätebefestigungsseite 205 auf.

Diejenige Schmalseite des Zwischenteils 10, an der der Sitz 12 angeformt ist, wird, well in montierter Lage unten befindlich, im folgenden als untere Schmalseite 19 bezeichnet, die gegenüberliegende Schmalseite als obere Schmalseite 18. Der Sitz 12 ist im wesentlichen durch eine zweite Platte gebildet, die rechtwinklig an der ersten Platte 11 angebracht ist.

Diejenige Breitseite des Zwischenteils 10, an der der Sitz angebracht ist, wird im folgenden als Geräteseite 20 bezeichnet, die andere Breitseite wird als Befestigungsseite 22 bezeichnet. An der oberen Schmalseite 18 ist an dem Teil 10 ein in etwa senkrecht aus der Geräteseite 20 herausragender Haltehaken 24 angebracht, derart, dass der Haltehaken 24 das Installationsschaltgerät 2, das in das Zwischenteil 10 aufgenommen ist, an dessen oberer Schmalseite 203 lösbar festhält.

An der oberen Schmalseite 18 ist an dem Teil 10 weiterhin ein Befestigungselement 26 angebracht, das im vorliegenden Fall im wesentlichen ein Haken ist, der eine Stromschiene 14 in eingebautem Zustand hintergreift.

Im unteren Abschnitt des Teils 10 ist an der Befestigungsseite 22 eine längserstreckte, zur unteren Schmalseite 19 hin offene Ausnehmung 28 eingebracht, in der ein Halteteil 30 längsverschieblich in Längserstreckungsrichtung des Teils 10 aufgenommen ist.

Das Halteteil 30 umfasst als Grundkörper eine rechteckige Platte 32, in deren unterem Drittel und von der Befestigungsseite 22 wegweisend ein Rasthaken 34 angebracht ist. In der in der Fig. 1 gezeigten Raststellung des Halteteils 30 hintergreift der Rasthaken 34 die Stromschiene 16.

Das Halteteil 30 ist aus der in Fig. 1 gezeigten Raststellung nach unten - also in Richtung auf die untere Schmalseite 19 - hin in eine Entnahmestellung verschiebbar, so dass in der Entnahmestellung der Rasthaken 34 die Stromstelle 16 nicht mehr hintergreift. Am unteren Ende des Grundkörpers 32 des Halteteils 30 ist eine quer dazu verlaufende Ausnehmung 36 als Eingriff für ein Betätigungswerkzeug eingebracht, beispielsweise für einen Schraubendreher.

Am oberen Ende des Grundkörpers 32 des Halteteils 30 ist eine u-förmig gebogene Feder 38 als Biegefeder angeformt. Mit ihrem freien Ende stützt sich die Biegefeder 38 auf einem ersten Vorsprung 40 an der Befestigungsseite des Teils 10 ab. Dadurch ist gewährleistet, dass das Halteteil 30 durch die Rückstellkraft der Feder 38 federnd in Richtung der Raststellung beaufschlagt ist.

Der Rasthaken 34 befindet sich an der Spitze einer Rasthakenträgerplatte 42, die senkrecht zu dem Grundkörper 32 des Halteteils 30 an diesem angeformt ist. An der Rasthakenträgerplatte 42 ist in einer parallel zur unteren Schmalseite 19 verlaufende Achse 44 ein zweiarmiger Sperrhebel 46 verschwenkbar gelagert. Der als Doppelarmhebel ausgebildete Sperrhebel 46 weist einen Haltearm 48 und einen Zugarm 50 auf und verläuft in Richtung der größeren Seitenkante der ersten Platte 11.

Am freien Ende des Zugarms 50 ist eine als Zugfeder ausgebildete Spiralfeder 52 befestigt, deren zweiter Aufpunkt an dem Grundkörper 32 des Halteteils 30 dem Zugarm 50 gegenüberliegend befestigt ist. Durch die Spiralfeder 52 wird der Sperrhebel 46 mit einer solchen Kraft beaufschlagt, dass der Halterarm 48 sich in Richtung des Rasthakens 34 bewegt, wenn ihm kein Widerstand entgegengesetzt wird.

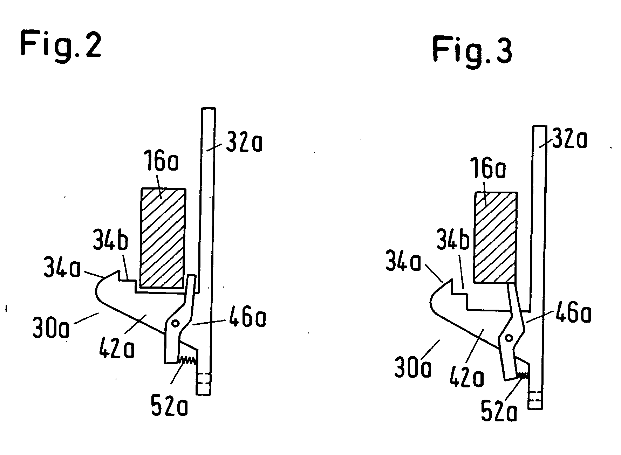

In der in Fig. 1 - und in Fig. 2 in vergrößerter Detailansicht ebenso - gezeigten Lage ist der Sperrhebel 46 jedoch durch die Stromschiene 16 in eine solche Position gebracht, dass der Halterarm 48 in einen Zwischenraum zwischen der Stromschiene 16 und der Befestigungsseite des Tells 10 eingreift. Diese Position ist die Ruheposition des Sperrhebels 46. In dieser Ruheposition ist die Spiralfeder 52 gespannt.

Wird nun das Halteteil 30 von einem Bediener mittels eines Werkzeuges, beispielsweise eines Schraubendrehers, der in dem Durchgriff oder der Ausnehmung 36 eingesetzt und nach unten gedrückt wird, aus der in Fig. 1 und 2 gezeigten Raststellung nach unten in die Entnahmestellung verbracht, so gehen das Halteteil 30 und der Sperrhebel 46 in die in Fig. 3 gezeigte Position über. Der Rasthaken 34 löst sich von der Stromschiene 16 und gibt diese frei. Sobald die Stromschiene 16 den Haltearm 48 des Sperrhebels 46 bei dessen Zurückgleiten nach unten hin frei gibt, wird der Sperrhebel 46 durch die Rückstellkraft der Spiralfeder 52 so gedreht, dass sich der Haltearm 48 in Richtung auf den Rasthaken 34 hin dreht. Das freie Ende des Haltearms 48 gelangt somit unter die Stromschiene 16.

Wenn nun der Bediener das Werkzeug loslässt oder entfernt, so wird das Halteteil 30 durch die rückstellende Kraft der Bogenfeder 38 zurück in Richtung der Raststellung durch eine Kraft beaufschlagt. Der Sperrhebel 46, der sich jetzt in seiner in Fig. 3 gezeigten Halteposition befindet, verhindert jedoch ein Zurückgleiten des Halteteils in die Raststellung. Denn der Sperrhebel 46 stützt sich mit seinem Haltearm 48 an der unteren Schmalseite der Stromschiene 16 ab.

Das Teil 10 bleibt somit auf den Stromschienen 16 und 14 gehalten, lässt sich jedoch nun in Richtung auf die Geräteseite hin, also nach vorne, leicht abnehmen. Beim erneuten Aufsetzen des Teils 10 auf die Stromschienen 16, 14 drückt die Stromschiene 16 den Haltearm 48 des Sperrhebels 46 aus der Halteposition in die Ruheposition, das heißt in den Zwischenraum zwischen dem Teil 10 und der Stromschiene 16, wie in Fig. 2 bzw. I gezeigt. Die Spiralfeder 52 wird dabei erneut gespannt.

Fig. 2 zeigt ein Halteteil 30a, das dem Halteteil 30 weitgehend entspricht, mit dem Unterschied, dass der Rasthaken 34 bei dem Halteteil 30a zweistufig ausgebildet ist, so dass sich zwei Rasthaken 34a und 34b an dem Ende der Rasthakenträgerplatte 42a befinden. Der Abstand der Rasthaken 34a, bzw. 34b von der Grundkörperträgerplatte 32a ist so gewählt, das jeweils Stromschienen einfacher und doppelter Dicke hintergreif bar sind. Fig 2 zeigt das Halteteil 30a in der Rastposition, der Sperrhebel 46a befindet sich in seiner Ruheposition.

Fig. 3 zeigt das Halteteil 30a wie in Fig. 2 beschrieben, in der Entnahmestellung. Der Sperrhebel 46a in seiner Halteposition stützt sich gegen das untere Ende der Stromschiene 16a, einer Stromschiene einfacher Dicke, und verhindert so das Zurückgleiten des Halteteils 30a aus der Entnahmestellung in die Raststellung.

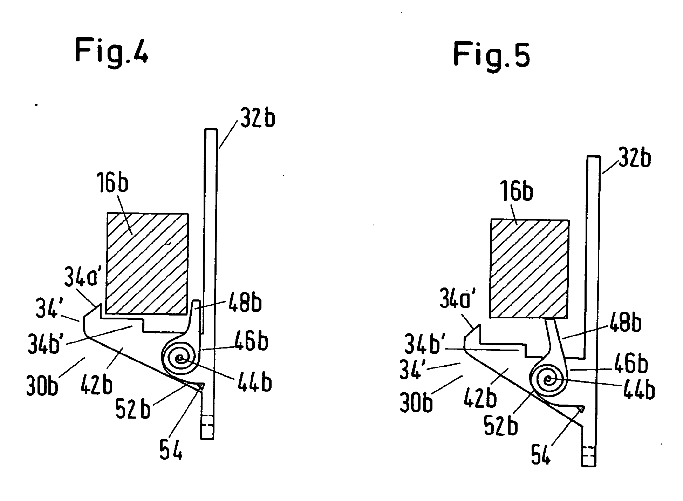

Die Figuren 4 und 5 zeigen eine Variante in Form eines Halteteils 30b, bei dem der Rasthaken 34 ebenfalls zweistufig ausgebildet ist, und zwar mit den Stufen 34a und 34b.

In Fig. 4 ist das Halteteil 30b in seiner Raststellung gezeigt, der Rasthaken 34a hintergreift hier eine Stromschiene 16b: Der Sperrhebel 46b in der Ausführungsform nach Fig. 4 ist ein einarmiger Hebel. Er besitzt einen Haltearm 48b, der verschwenkbar an der Achse 44b auf der Rasthakenträgerplatte 42b gelagert ist. Für die auf den Sperrhebel 46b wirkende Rückstellkraft sorgt in der Ausführungsform nach Fig. 4 und 5 eine Spiralfeder 52b, deren freies Ende sich an einen Vorsprung 54 an dem Grundkörper 32b des Halteteils 30b abstützt.

Fig. 5 zeigt das Halteteil 30b in der Entnahmestellung, wobei sich der Sperrhebel 46b an der Unterseite der Stromschiene 16b abstützt, und so ein Zurückgleiten des Halteteils 30b in die Rastposition verhindert.

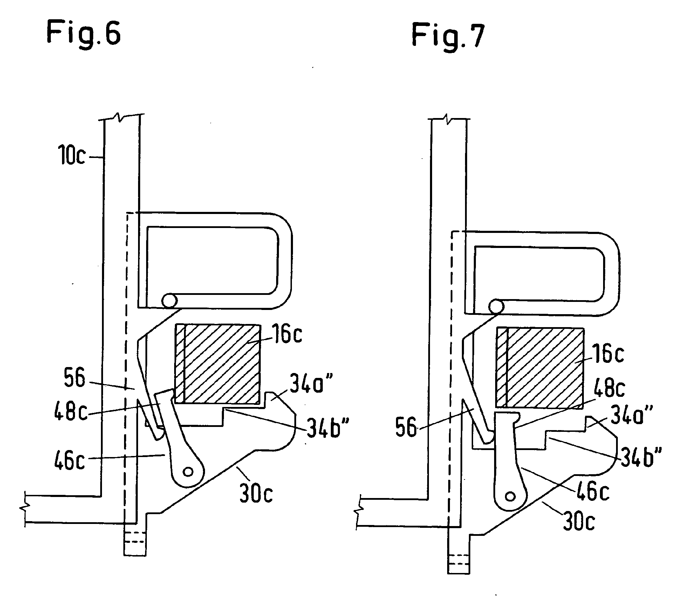

Fig. 6 zeigt eine weitere Variante für ein erfindungsgemäßes Teil 10c mit einem Halteteil 30c in der Raststellung. Fig. 7 zeigt diese Variante mit dem in der Entnahmestellung befindlichen Halteteil 30c.

Im Unterschied zu den oben beschriebenen Ausführungsformen nach den Fig. 1 bis 5 wird der Sperrhebel 46c in der Variante nach Fig. 6 nicht durch Federkraft aus seiner Ruheposition in die Halteposition verbracht, sondern durch Zusammenwirken mit einem Haltevorsprung 56, der an der Befestigungsseite des Teils 10c angebracht ist. Dieser Haltevorsprung 56e hat die Form eines schräg nach unten weisenden starren Armes und ist so angebracht, dass er eine schräge Gleitebene für den Haltearm 48c des s Sperrhebels 46c darstellt.

In der Rastposition des Halteteils 30c nach Fig. 6 befindet sich der Sperrhebel 46c in seiner Ruheposition in dem Zwischenraum zwischen der Stromschiene 16c - einer Stromschiene in doppelter Dicke - und der Befestigungsseite des Teils 10c. Der Haltearm 48c des Sperrhebels 46c (überdeckt sich auf einem erheblichen Tell mit dem Haltevorsprung 56.

Wenn das Halteteil 30c, wie in Fig. 7 gezeigt, in die Entnahmestellung verbracht, also nach unten gezogen wird, so gleitet der Haltearm 48 c entlang der schrägen Fläche des Haltevorsprungs 56 und wird somit in Richtung auf die Rastnasen 34c" bzw. 34b" des Halteteils 30c hin gedrückt.

In der Entnahmestellung des Halteteils 30c schließlich ist der Sperrhebel 46c durch das von der Befestigungsseite des Teiles 10c abstehende Ende des Haltevorsprungs 56 hin unter die Schmalseite der Stromschiene 1 6c gedrückt, so dass das Halteteil 30c an einem Zurückgleiten in seine Rastposition gehindert ist.

Der Vorteil der Ausführungsformen wie in Fig. 6 und Fig. 7 gezeigt liegt darin, dass kein 20 zusätzliches Bauteil in Form einer Feder benötigt wird, um den Sperrhebel 46 aus seiner Ruheposition in die Halteposition zu bewegen. Der Haltevorsprung 56 kann bei der Fertigung des Teils 10c, was beispielsweise in Spritzgusstechnik erfolgen kann, in einem Arbeitsgang mit angebracht werden.

## Patentansprüche

1. Auf Trägerelementen, insbesondere Stromschienen oder Normprofilschienen, einer elektrischen Einrichtung, anzuordnendes Teil (10), insbesondere Installationsschaltgerät oder Zwischenteil für die Aufnahme eines Installationsschaltgerätes, mit einem Halteteil, das in einer Raststellung eine der Stromschienen hintergreift und in einer Entnahmestellung die Stromschiene freigibt, so dass das Teil in der Entnahmestellung von dem Trägerelement abnehmbar ist, **dadurch gekennzeichnet, dass** mit dem Halteteil (30, 30a, 30b, 30c) ein Sperrhebel (46, 46a, 46b, 46c) zusammenwirkt, derart, dass der Sperrhebel (46, 46a, 46b, 46c) in der Entnahmestellung des Halteteils (30, 30a, 30b, 30c) eine Halteposition einnimmt, in der er mit dem Trägerelement (16, 16a, 16b, 16c) so zusammenwirkt, dass ein Zurückgleiten des Halteteils (30, 30a, 30b, 30c) aus der Entnahme- in die Raststellung so lange verhindert wird, wie das Teil (10, 10c) sich auf dem Trägerelement (16, 16a, 16b, 16c) befindet.

2. Teil nach Anspruch 1, **dadurch gekennzeichnet, dass** der Sperrhebel (46, 46a, 46b, 46c) an dem Halteteil (30, 30a, 30b, 30c) verschwenkbar gelagert ist.

3. Teil nach einem der vorherigen Ansprüche, **dadurch gekennzeichnet, dass** der Sperrhebel (46, 46a, 46b, 46c) in der Raststellung des Halteteils (30, 30a, 30b, 30c) durch das Trägerelement (16, 16a, 16b, 16c) in einer Ruheposition gehalten ist, aus der heraus er in der Entnahmestellung des Halteteils (30, 30a, 30b, 30c) in die Halteposition verbringbar ist.

4. Teil nach einem der vorigen Ansprüche, **dadurch gekennzeichnet, dass** der Sperrhebel (46, 46a, 46b, 46c) beim Einsetzen des Teils (10) auf das Trägerelement (16, 16a, 16b, 16c) durch dieses in die Ruheposition verbringbar ist.

5. Teil nach einem der Ansprüche 1 bis 4, **dadurch gekennzeichnet, dass** der Sperrhebel (46, 46a, 46b) durch die Rückstellkraft einer mit ihm zusammenwirkenden Feder (52, 52a, 52b) aus seiner Ruheposition in seine Halteposition verbringbar ist.

6. Teil nach Anspruch 5, **dadurch gekennzeichnet, dass** sich der erste Anlenkpunkt der Feder (52, 52a, 52b) an dem Sperrhebel (46, 46a, 46b) und der zweite Anlenkpunkt der Feder (52, 52a, 52b) an dem Halteteil (30, 30a, 30b) befindet.

7. Teil nach Anspruch 6, **dadurch gekennzeichnet, dass** die Feder (52, 52a, 52b) eine Schraubenfeder oder eine Spiralfeder oder eine Blattfeder ist.

8. Teil nach einem der Ansprüche 1 bis 4, **dadurch gekennzeichnet, dass** auf der Befestigungsseite des Teils (10c) ein Haltevorsprung (56) so angeordnet und bemessen ist, dass er beim Übergang des Halteteils (30c) von der Raststellung in die Entnahmestellung mit dem Sperrhebel (46c) so zusammenwirkt, dass bei Erreichen der Entnahmestellung der Sperrhebel (46c) durch den Haltevorsprung (56) in seine Halteposition gedrückt ist.

9. Teil nach einem der vorigen Ansprüche, **dadurch gekennzeichnet, dass** das Halteteil (30, 30a, 30b, 30c) mit einem Werkzeug aus der Raststellung in die Entnahmestellung verbringbar ist.

10. Teil nach einem der vorigen Ansprüche, **dadurch gekennzeichnet, dass** das Halteteil (30, 30a, 30b, 30c) federnd mit einer Rückstellkraft in Richtung der Raststellung beaufschlagt ist, so dass das Halteteil (30, 30a, 30b, 30c) nach Entnahme des Teils (10, 10c) von dem Trägerelement (16, 16a, 16b, 16c) wieder in die Raststellung bewegt wird.

11. Teil nach einem der vorigen Ansprüche, **dadurch gekennzeichnet, dass** der Sperrhebel (46, 46a, 46b, 46c) in der Ruheposition in einen Zwischenraum zwischen dem Trägerelement (16, 16a, 16b, 16c) und der Befestigungsseite des Teils eingreift.

12. Teil nach einem der vorigen Ansprüche, **dadurch gekennzeichnet, dass** das Halteteil (30a, 30b, 30c) zweistufig ausgebildet ist, so dass es auf Stromschienen (16, 16a, 16b, 16c) einfacher und doppelter Dicke anbringbar ist.

## Claims

1. A part (10) to be arranged on carrier elements, especially conductor rails or standard mounting rails of an electrical device, especially an installation switchgear or intermediate part for receiving an installation switchgear, comprising a holding part which grasps behind one of the conductor rails in the latched position and releases the conductor rail in a removal position, so that the part can be removed from then carrier elements in the removal position, **characterized in that** a locking lever (46, 46a, 46b, 46c) cooperates with the holding part (30, 30a, 30b, 30c), such that the locking lever (46, 46a, 46b, 46c) assumes a holding position in the removal position of the holding part (30, 30a, 30b, 30c) in which it cooperates with the carrier element (16, 16a, 16b, 16c) in such a way that the sliding back of the holding part (30, 30a, 30b, 30c) from the removal to the latched position is prevented for as long as the part (10, 10c) is situated on the carrier element (16, 16a, 16b, 16c).

2. A part according to claim 1, **characterized in that** the locking lever (46, 46a, 46b, 46c) is pivotably held on the holding part (30, 30a, 30b, 30c).

3. A part according to one of the preceding claims, **characterized in that** the locking lever (46, 46a, 46b, 46c) is held in the latched position of the holding part (30, 30a, 30b, 30c) by the carrier element (16, 16a, 16b, 16c) in an idle position from which it can be brought in the removal position of the holding part (30, 30a, 30b, 30c) to the holding position.

4. A part according to one of the preceding claims, **characterized in that** during the insertion of the part (10) on the carrier element (16, 16a, 16b, 16c) the locking lever (46, 46a, 46b, 46c) can be brought by the same to the idle position.

5. A part according to one of the claims 1 to 4, **characterized in that** the locking lever (46, 46a, 46b) can be brought from its idle position to its holding position by the restoring force of a spring (52, 52a, 52b) cooperating with the same.

6. A part according to claim 5, **characterized in that** the first link point of the spring (52, 52a, 52b) is located on the locking lever (46, 46a, 46b) and the second link point of the spring (52, 52a, 52b) on the holding part (30, 30a, 30b).

7. A part according to claim 6, **characterized in that** the spring (52, 52a, 52b) is a coil spring or a spiral spring or a leaf spring.

8. A part according to one of the claims 1 to 5, **characterized in that** a holding projection (56) is arranged on the fastening side of the part (10c) and is dimensioned in such a way that it cooperates with the locking lever (46c) in such a way upon transition of the holding part (30c) from the latched position to the removal position that upon reaching the removal position the locking lever 846c) is pressed by the holding projection (56) into its holding position.

9. A part according to one of the preceding claims, **characterized in that** the holding part (30, 30a, 30b, 30c) can be moved by a tool from the latched position to the removal position.

10. A part according to one of the preceding claims, **characterized in that** the holding part (30, 30a, 30b, 30c) can be pressed in a resilient manner with a restoring force in the direction of the latched position, so that the holding part (30, 30a, 30b, 30c) is moved to its latched position again after the removal of the part (10, 10c) from the carrier element (16, 16a, 16b, 16c).

11. A part according to one of the preceding claims, **characterized in that** the locking lever (46, 46a, 46b, 46c) engages in the idle position into a cavity between the carrier element (16, 16a, 16b, 16c) and the fastening side of the part.

12. A part according to one of the preceding claims, **characterized in that** the holding part (30a, 30b, 30c) is provided with a two-step configuration, so that it can be attached to conductor rails (16, 16a, 16b, 16c) of single and double width.

## Revendications

1. Composant (10), notamment disjoncteur d'installation ou élément intermédiaire destiné à recevoir un disjoncteur d'installation, à monter sur des éléments supports, notamment sur des barres conductrices ou des rails profilés normalisés, d'une installation électrique, comportant une partie de fixation qui dans une position d'encliquetage s'accroche derrière l'une des barres conductrices et dans une position de démontage libère la barre conductrice de sorte que, dans la position de démontage, le composant puisse être éloigné de l'élément support, **caractérisé par le fait qu'**un levier de blocage (46, 46a, 46b, 46c) coopère avec la partie de fixation (30, 30à, 30b, 30c) en ce sens que le levier de blocage (46, 46a, 46b, 46c), dans la position de démontage de la partie de fixation (30, 30a, 30b, 30c), occupe une position de retenue, dans laquelle il coopère avec l'élément support (16, 16a, 16b, 16c) pour empêcher un retour de la partie de fixation (30, 30a, 30b, 30c) de la position de démontage dans la position d'encliquetage tant que le composant (10, 10c) se trouve sur l'élément support (16, 16a).

2. Composant selon la revendication 1, **caractérisé par le fait que** le levier de blocage (46, 46a, 46b, 46c) est monté pivotant sur la partie de fixation (30, 30a, 30b, 30c).

3. Composant selon une des revendications précédentes, **caractérisé par le fait que** le levier de blocage (46, 46a, 46b, 46c), dans la position d'encliquetage de la partie de fixation (30, 30a, 30b, 30c) est maintenu dans une position de repos par l'élément support (16, 16a, 16b, 16c), position depuis laquelle, dans la position de démontage de la partie de fixation (30, 30a, 30b, 30c), il peut être amené dans la position de retenue.

4. Composant selon une des revendications précédentes, **caractérisé par le fait que** le levier de blocage (46, 46a, 46b, 46c), lors de la mise en place du composant (10) sur l'élément support (16, 16a, 16b, 16c), est amené dans la position de repos par celui-ci.

5. Composant selon une des revendications 1 à 4, **caractérisé par le fait que** le levier de blocage (46, 46a, 46b) peut être ramené de sa position de repos dans sa position de retenue par la force de rappel d'un ressort (52, 52a, 52b) qui coopère avec lui.

6. Composant selon la revendication 5, **caractérisé par le fait que** le premier point d'articulation du ressort (52, 52a, 52b) est situé sur le levier de blocage (46, 46a, 46b) et le deuxième point d'articulation du ressort 52, 52a, 52b) est situé sur la partie de fixation (30, 30a, 30b).

7. Composant selon la revendication 6, **caractérisé par le fait que** le ressort (52, 52a, 52b) est un ressort hélicoïdal ou un ressort spirale ou un ressort à lame.

8. Composant selon une des revendications 1 à 4, **caractérisé par le fait qu'**une saillie de retenue (56) est disposée sur la face de fixation du composant (10c) et est dimensionnée de telle sorte que lors du passage de la partie de fixation (30c) de la position d'encliquetage à la position de démontage ladite saillie coopère avec le levier de blocage (46c) afin que ledit levier de blocage (46c) soit repoussé dans sa position de retenue par la saillie de retenue (56) lorsque la position de démontage est atteinte.

9. Composant selon une des revendications précédentes, **caractérisé par le fait que** la partie de fixation (30, 30a, 30b, 30c) peut être amenée de la position d'encliquetage dans la position de démontage au moyen d'un outil.

10. Composant selon une des revendications précédentes, **caractérisé par le fait que** la partie de fixation (30, 30a, 30b, 30c) est sollicitée élastiquement avec une force de rappel dans la direction de la position d'encliquetage de sorte que la partie de fixation (30, 30a, 30b, 30c), après retrait du composant (10, 10c) de l'élément support (16, 16a, 16b, 16c), est ramenée dans la position d'encliquetage.

11. Composant selon une des revendications précédentes, **caractérisé par le fait que** le levier de blocage (46, 46a, 46b, 46c), dans la position de repos, pénètre dans un espace intermédiaire entre l'élément support (16,16a, 16b, 16c) et la face de fixation du composant.

12. Composant selon une des revendications précédentes, **caractérisé par le fait que** la partie de fixation (30a, 30b, 30c) est conformée avec deux gradins de sorte qu'elle peut être montée sur des barres conductrices (16,16a, 16b, 16c) de simple épaisseur ou d'épaisseur double.
